# EUROPEAN PATENT SPECIFICATION

(11) **EP 3 160 625 B1**
(45) Date of publication and mention of the grant of the patent: **18.10.2017**
(21) Application number: 15747498.2
(22) Date of filing: 29.06.2015
(51) Int. Cl.: B01J 8/18, B01J 8/22, B01F 3/04, B01F 7/00

(54) **A REACTOR FOR MIXING LIQUID, GAS AND SOLID MATERIAL**
REAKTOR ZUM MISCHEN VON FLÜSSIGKEITEN, GASEN UND FESTSTOFFEN
RÉACTEUR POUR LE MÉLANGE DE LIQUIDE, DE GAZ ET DE MATIÈRE SOLIDE

(30) Priority: 30.06.2014 FI 20145632
(43) Date of publication of application: 03.05.2017
(73) Proprietor: Outotec (Finland) Oy, 02230 Espoo (FI)
(72) Inventor: XIA, Jiliang, 28300 Pori (FI); LATVA-KOKKO, Marko, 28600 Pori (FI); RITASALO, Teemu, 02760 Espoo (FI)
(74) Representative: Kolster Oy Ab
(86) International application number: PCT/FI2015/050475
(87) International publication number: WO 2016/001486

(56) References cited:
- EP-A1- 0 619 139
- WO-A1-2011/113997
- US-A- 2 890 251
- US-A- 4 648 973
- US-A- 5 723 041
- US-A1- 2004 155 368

## Description

### FIELD OF THE INVENTION

The present invention relates to a reactor for mixing liquid, gas and solid material.

### BACKGROUND OF THE INVENTION

Reactors for mixing liquid, gas and solid material can be used in direct leaching and in industrial processes for the treatment and conversion of chemicals and minerals and in waste water treatment.

Leaching of solid matter from sludge can be done in direct leaching with an atmospheric process for metal concentrates e.g. sulphidic zinc concentrates. The direct leaching process based on the use of special leaching reactors is one of the most economical ways to produce e.g. electrolytic zinc.

WO publication 01/12307 discloses a bottom-agitated reactor. The reactor comprises a vertically extending cylindrical reactor tank. The bottom of the reactor tank is closed and the upper end of the reactor tank is open. The height of the reactor tank is several times the diameter of the reactor tank. A concentric central pipe is positioned within the reactor tank. The central pipe has a downwardly contracting conical portion at the upper end of the pipe and a downwardly expanding conical portion at the lower end. The lower end of the central pipe is positioned at a distance from the bottom of the reactor tank. A double action impeller is located at the lower end of the central pipe above the bottom of the reactor tank which means that the shaft of the impeller passes through an opening in the closed bottom of the reactor tank. The shaft is thus sealed in said opening. The impeller is formed of two parts having a horizontal plate between them. Curved blades are fixed above the horizontal plate which suck the sludge downward in the central pipe. The blades fixed underneath the horizontal plate form a straight-bladed turbine impeller. A gas is fed with a pipe through the bottom of the reactor tank to a position underneath the impeller, whereby the lower part of the impeller disperses the gas into very small bubbles, thus asssiting the dissolution of the gas into the sludge. A flow is formed with the curved blades of the impeller which sucks the sludge from the central pipe downwards towards the bottom of the reactor tank. The direction of the flow is turned 180 degrees at the bottom of the reactor tank after which the flow flows upwards in the space between the reactor tank and the central pipe towards the upper end of the reactor tank. The distance of the central pipe from the reactor bottom is in the range of 0.2 to 1.0 times the reactor diameter preferably in the range of 0.3 to 0.5. The surface area ratio between the central pipe and the casing of the reactor surrounding it is below 0.1. This means that the ratio between the diameter of the central pipe and the diameter of the reactor tank is 0.32. This bottom-agitated reactor provides a high gas dispersion capacity. A part of the energy supplied to the impeller is consumed in the dispersion action around the impeller.

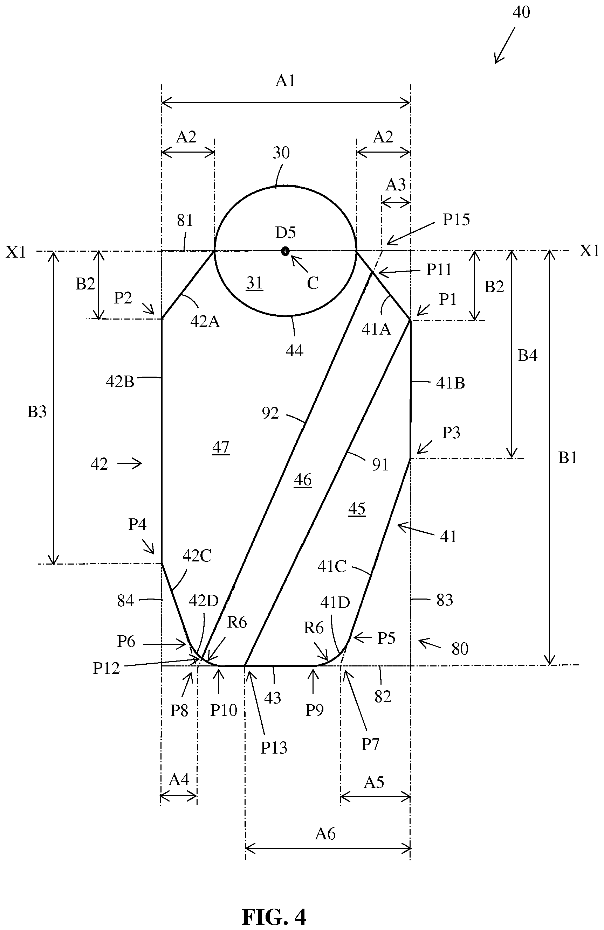

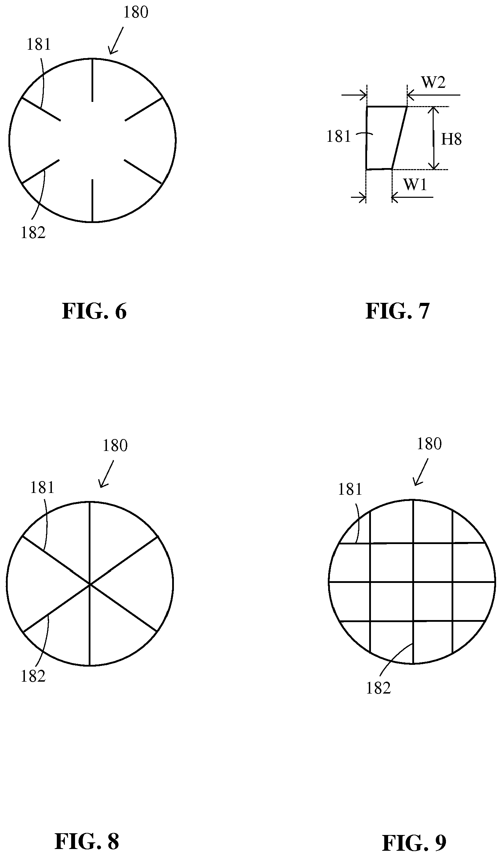

US patent 4,648,973 discloses a top-agitated reactor. The reactor comprises in the embodiment shown in figure 4 a central vertical tube surrounded by an outer vertical reactor tank. There is an impeller at the upper end of the central tube. There are further baffles on the inner rim of the central tube above the impeller in order to prevent harmful vortex and a flow-straightening grid below the impeller. The central tube has the same diameter along the whole height of the central tube. The outer tube comprises a widening at the upper end of the reactor tank and a separate widening sleeve is provided on the upper end of the central tube. The cross section area of the flow path is thus expanded in the widening part, which means that the velocity of the ascending sludge is slowed down in this widening part. This will stabilize the sludge level in the reactor tank. Figure 6 shows an embodiment where the central tube and the reactor tank comprises a widening at the upper end of the reactor. The efficiency of the impeller can thus be increased by increasing its diameter. Oxygen or a gas containing oxygen is introduced into the sludge flow in the central tube below the impeller through oxygen supply pipes. Immediately below the oxygen supply pipe is a venturi throttling the flow. There are several pairs of oxygen supply pipes and venturis positioned at a vertical distance from each other along the height of the central tube below the impeller. The height of the reactor is a multiple of the its diameter. The ratio between the diameter of the central tube and the diameter of the reactor tank is in the range of 0.4 to 0.85. This top-agitated reactor provides a moderate gas dispersion capacity and a relatively low energy consumption. A major part of the energy supplied to the reactor is formed into sludge recirculation.

Reactors for mixing fluid, gas and solid material provided with a draft tube in the middle of the raector tank can be divided according to the position of the impeller into top-agitated and bottom-agitated reactors. The previously mentioned US patent 4,648,973 is an example of a top-agitated reactor and the previously mentioned WO publication 01/12307 is an example of a bottom-agitated reactor. A bottom-agitated reactor provides stronger gas dispersion compared to a top-agitated reactor. This is due to the fact that about half of the pumped mass flow rate is recirculating around the impeller in a bottom-agitated apparatus whereas a major part of the pumped mass flow is recirculating through the draft tube in a top-agitated reactor. A bottom-agitated reactor has a high power consumption and a low pumping effectiveness compared to a top-agitated reactor. A bottom-agitated reactor is therefore suitable for a situation where we have a high gas flow rate i.e. a great amounth of gas is to be mixed into the fluid. A top-agitated reactor is on the other hand suitable for a situation where the gas flow rate is moderate i.e. a moderate amounth of gas is to be mixed into the fluid.

WO publication 02/07866 discloses a mixing apparatus and a method for mixing a gas in a closed reactor. The reactor has a high efficiency and uses a gas as a process chemical in a solution having a great content of pulverous solids. The aim is to obtain a flow in the reactor which sucks gas from the above surface of the liquid using rotating mixing devices in the centre of the reactor, and to mix said gas throughout the reactor capacity. The mixing apparatus comprises at least two impellers located at different heights, and on the same shaft. The upper impeller is equipped with a central plate attached to the shaft, with essentially vertical inner blades rising upwards and downwards and outer vanes directed outwards from the central plate, which are inclined from the horizontal. The lower impeller is equipped with a central plate attached to the shaft with vertical blades located on the outer edge. This belongs to a category of reactors where we do not have any draft tube in the reactor tank at all. There is thus no circulation of the sludge between a draft tube positioned within the reactor tank and the reactor tank. Also the ratio between the height of the reactor tank and the diameter of the reactor tank is in this reactor type lower i.e. in the range of 1.0 to 1.5.

WO publication 2013/124539 discloses a blade of an axial flow impeller and an axial flow impeller. The blade has a leading edge, a trailing edge, a tip and a rooth attachable to a central hub of the impeller. The cross section of the blade is formed by a circular hub and an enveloping rectangle. The rectangle has a width and a length. A first short side of the rectangle passes along the diameter of the circular hub and extends at an equal first distance beyond the diameter of the hub at both sides of the circular hub. There are cot-outs at each corner of the rectangle. The blade starts as a diverging cone from the ends of the diameter of the hub and expands symmetrically to the longer sides of the reactangle. The cut-outs at the outer corners of the rectangle are nonsymmetrical. They start as straight inclined lines from the longer sides of the rectangle and end through a curved line to the tip of the blade i.e. the second short side of the rectangle. The blade comprises further two bends, which divide the blade into a leading edge portion, a centre portion and a trailing edge portion. The leading edge portion is angled at a first angle downwards in relation to the centre portion and the trailing edge portion is angled at a second angle downwards in relation to the centre portion. The centre portion is angled at a third angle in relation to the horizontal plane. The three portions are flat sections.

### BRIEF DESCRIPTION OF THE INVENTION

An object of the present invention is to achieve an improved reactor for mixing liquid, gas and solid matter.

The object of the invention is achieved with a reactor for mixing liquid, gas and solid matter according to claim 1.

The reactor comprises:
a vertically extending cylindrical reactor tank having an upper end and a closed bottom, said reactor tank further having a diameter, and a height that is several times the diameter,
a draft tube extending vertically and concentrically within the reactor tank and being supported at the reactor tank, said draft tube having a height, an open upper end forming an inlet opening, and an open lower end forming an outlet opening, the upper end being positioned at a height forming an upper clearance below the free surface level of the sludge in the reactor tank, the lower end being positioned at a height forming a bottom clearance above the bottom of the reactor tank,
an impeller connected to a vertical shaft being positioned within the draft tube,
a baffle arrangement being positioned within the draft tube below the impeller, and
a gas supply device being positioned within the draft tube below the impeller.

The reactor is characterized in that:
the draft tube is formed of a continuous construction comprising four portions, said portions being formed from the upper end towards the lower end of:
   a first conical portion contracting towards a lower end, said first conical portion having a height and a cone angle, an upper end of the first conical portion forming the upper end of the draft tube,
   a first cylindrical portion having a diameter and a height, an upper end of the first cylindrical portion coinciding with the lower end of the first conical portion,
   a second conical portion contracting towards a lower end, said second conical portion having a height and a cone angle, an upper end of the second conical portion coinciding with a lower end of the first cylindrical portion, and
   a second cylindrical portion having a diameter and a height, an upper end of the second cylindrical portion coinciding with the lower end of the second conical portion, a lower end of the second cylindrical portion forming the lower end of the draft tube,
   whereby the impeller being an axial flow impeller is positioned at a lower end of the first cylindrical portion and the vertical shaft extends concentrically upwards through the upper end of the reactor tank, the baffle arrangement being formed of vertically extending baffles is positioned within the second conical portion.

The top-agitated reactor according to the invention produces a homogenous mixing of the sludge with a low energy consumption.

The specific draft tube in the top-agitated reactor according to the invention introduces a flow pattern favourable for efficient agitating and mixing.

The top-agitated reactor according to the invention prevents solid bed formation in the bottom of the reactor during operation.

The top-agitated reactor according to the invention will automatically remove the solid bed formed during shutdown of the reactor when the reactor is started again. A reactor is shut down during maintenance and in emergency cases.

The top-agitated reactor according to the invention uses nearly the whole mass flow rate that has been pumped by the axial flow impeller for recirculating through the draft tube within the reactor and maximizes the power efficiency for mixing.

The top-agitated reactor according to the invention is advantageous in applications where the gas dispersion requirements are moderate.

The top-agitated reactor according to the invention is also easy to install and maintain and it is immune to leakage. The shaft of the impeller extends upwards through the upper end of the reactor tank. There is thus no need to seal the impeller shaft in a top-agitated reactor according to the invention. The shaft of the impeller passes in a bottom-agitated reactor through an opening at the closed bottom of the reactor tank and must therefore be sealed in said opening. The interior of the first conical portion and the first cylindrical portion of the draft tube is empty above the impeller. This means that the impeller can be lifted with the shaft from the upper end of the reactor tank without dismantling any equipment such as e.g. baffles positioned above the impeller.

The top-agitated reactor according to the invention can be used in direct leaching and in industrial processes for the treatment and conversion of chemicals and minerals and in waste water treatment. The top-agitated reactor according to the invention is especially suitable to be used for direct leaching of metals from sludge.

The top-agitated reactor according to the invention can thus be used for direct leaching of e.g. zinc. Such a direct leaching process could comprise e.g. 4-8 reactors connected in series. The need of oxygen in the reactors at the upstream end of such a leaching process could be in the order of e.g. 5 times the need for oxygen in the reactors at the downstream end of the leaching process.

The upstream end of the leaching process requires thus intensive agitation in order to disperse the great amount of oxygen into the sludge, but the agitation could be more moderate at the downstream end of the leaching process. This means that a prior art bottom-agitated reactor with a combined radial flow and axial flow mixing is probably more favourable at an upstream end of the leaching process. The top-agitated reactor according to the invention is, however, suitable to be used at a downstream end of the leaching process. This would reduce the total energy costs in the whole leaching process due to the better energy efficiency of the top-agitated reactors at the downstream end of the leaching process compared to the situation where all reactors are prior art bottom-agitated reactors.

### BRIEF DESCRIPTION OF THE DRAWINGS

In the following the invention will be described in greater detail by means of example embodiments with reference to the accompanying drawings, in which
Figure 1 shows a reactor according to the invention,
Figure 2 shows an enlargement of the draft tube of the reactor in figure 1,
Figure 3 shows a plan view of an impeller, which can be used in the reactor according to the invention,
Figure 4 shows a plan view of a blade of the impeller of figure 3,
Figure 5 shows a side view of the blade of the impeller of figure 4,
Figure 6 shows a cross section of a first embodiment of a baffle arrangement, which can be used in the reactor according to the invention,
Figure 7 shows a cross section of a baffle to be used in the baffle arrangement according to figure 6,
Figure 8 shows a cross section of a second embodiment of a baffle arrangement, which can be used in the reactor according to the invention,
Figure 9 shows a cross section of a third embodiment of a baffle arrangement, which can be used in the reactor according to the invention,
Figure 10 shows a cross section of a first embodiment of a gas supply device, which can be used in the reactor according to the invention,
Figure 11 shows a cross section of a second embodiment of a gas supply device, which can be used in the reactor according to the invention,
Figure 12 shows a cross section of a third embodiment of a gas supply device, which can be used in the reactor according to the invention,
Figure 13 shows the flow pattern of the reactor in figure 1,
Figure 14 shows a velocity vector plots for the sludge flow in a prior art bottom-agitated reactor,
Figure 15 shows a velocity path lines for the sludge flow in a prior art bottom-agitated reactor,
Figure 16 shows a velocity vector plots for the sludge flow in a top-agitated reactor according to the invention,
Figure 17 shows a velocity path lines for the sludge flow in a top-agitated reactor according to the invention,
Figure 18 shows volume fractions of the solution in a top-agitated reactor according to the invention,
Figure 19 shows volume fractions of tiny particles in a top-agitated reactor according to the invention,
Figure 20 shows volume fractions of coarse particles in a top-agitated reactor according to the invention.

### DETAILED DESCRIPTION OF EMBODIMENTS OF THE INVENTION

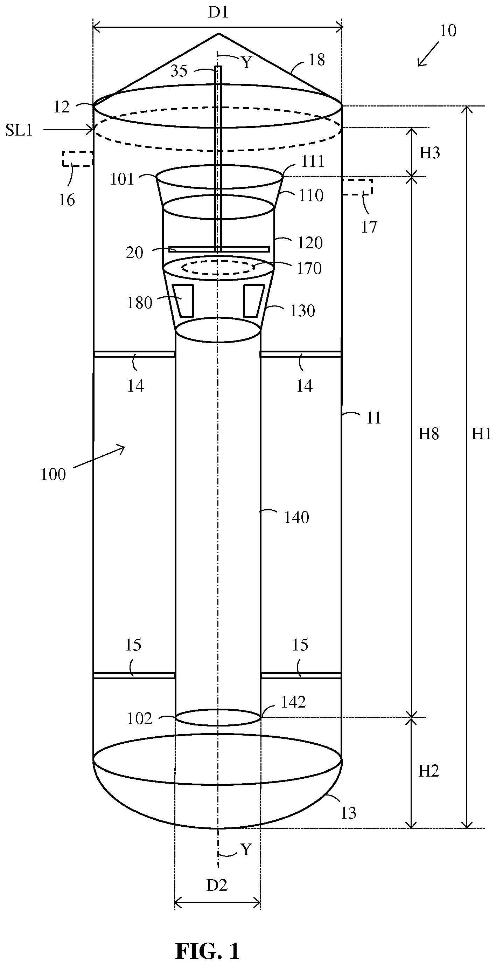

Figure 1 shows a reactor according to the invention. The reactor 10 comprises a reactor tank 11 having the form of a vertically directed cylinder. The upper end 12 of the reactor tank 11 is closed with a ceiling 18. The bottom end 13 of the reactor tank 11 is closed and has in this embodiment a semi-ellipsoidal shape. The bottom end 13 of the reactor tank 11 could, however, have a plain or a curved shape. The reactor tank 11 has a vertical centre axis Y-Y. The height H1 of the reactor tank 11 is several times the diameter D1 of the reactor tank 11. The reactor tank 11 comprises an inlet 16 for the sludge to be treated and an outlet 17 for the treated sludge. Such reactors 10 are normally connected several in series so that the sludge to be treated passes through several reactors 10 and is treated in each reactor 10. The pressure within the interior of the reactor tank 11 can be kept under or over the atmospheric pressure that is present outside the reactor tank 11.

A vertically directed draft tube 100 is positioned within the reactor tank 11. The vertical centre axis Y-Y of the reactor tank 11 forms also the vertical centre axis Y-Y of the draft tube 100. The draft tube 100 is thus positioned concentrically within the reactor tank 11. The draft tube 100 is attached to the reactor tank 11 with upper fastening means 14 and lower fastening means 15. The fastening means 14, 15 are advantageously radial support means extending between the draft tube 100 and the reactor tank 11. The draft tube 100 has an upper end 101 forming an inlet opening for the sludge and a lower end 102 forming an outlet opening for the sludge. The draft tube 100 has a height H8 between the upper end 101 and the lower end 102. The upper surface level SL1 of the sludge in the reactor tank 11 is kept above the upper end 101 of the draft tube 100. The draft tube 100 is thus totally submerged into the sludge, which is to be treated in the reactor 10.

The draft tube 100 comprises four portions 110, 120, 130, 140. The portions 110, 120, 130, 140 are from the upper end 101 towards the lower end 102: a first conical portion 110, a first cylindrical portion 120, a second conical portion 130 and a second cylindrical portion 140. The upper end 111 of the first conical portion 110 of the draft tube 100 forms the upper end 101 of the draft tube 100. The lower end 142 of the second cylindrical portion 140 of the draft tube 100 forms the lower end 102 of the draft tube 100. The lower end 102 of the draft tube 100 is situated at a height H2 above the above the bottom 13 of the reactor tank 11. Said height H2 forms a bottom clearance for the draft tube 100. The upper end 101 of the draft tube 100 is positioned at a height H3 below the free surface level SL1 of the sludge within the reactor tank 11. Said height H3 forms a top clearance for the draft tube 100.

The reactor 10 comprises further an impeller 20 positioned within the draft tube 100 at the lower end 122 of the second conical portion 120 of the draft tube 100. The shaft 35 of the impeller 20 extends vertically upwards out of the upper end 12 of the reactor tank 11. The impeller 20 is formed of an axial flow impeller producing a strong flow in the axial direction and little swirling in the radial direction around the impeller 20.

The reactor 10 comprises further a gas supply device 170 positioned within the draft tube 100. The gas supply device 170 is positioned below the impeller 20 at the bottom portion of the first cylindrical portion 120 of the draft tube 100.

The reactor 10 comprises further a baffle arrangement 180 positioned within the draft tube 100. The baffle arrangement 180 is positioned in the second conical portion 130 of the draft tube 100. The baffle arrangement 180 is thus situated below the impeller 20.

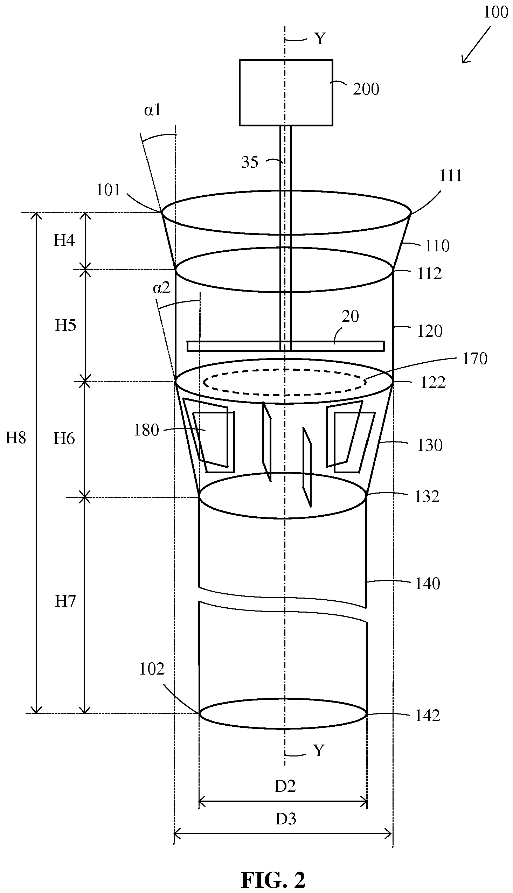

Figure 2 shows an enlargement of the draft tube of the reactor of figure 1. The first conical portion 110 of the draft tube 100 contributes to achieving a favourable flow pattern of the flow of sludge into the draft tube 100. The flow of sludge in the first cylindrical portion 120 will flow mainly in the axial direction Y-Y into the impeller 20. There is thus no need to install flow guiding means or baffles above the impeller 20. The favourable flow pattern of the flow of sludge into the draft tube 100 at the upper end 101 of the draft tube 100 is a result of the construction of the whole reactor and especially the construction of the draft tube 100.

The diameter D3 of the first cylindrical portion 120 of the draft tube 100 is larger than the diameter D2 of the second cylindrical portion 140 of the draft tube 100. This makes it possible to install an impeller 20 with a larger diameter D4 within the first cylindrical portion 120 compared to the diameter D2 of the second cylindrical portion 140 of the draft tube 100.

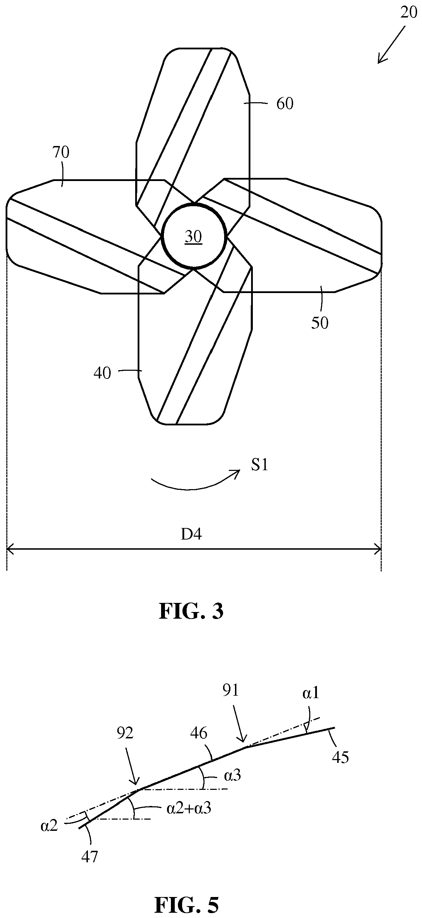

The impeller 20 is installed in the bottom portion of the first cylindrical portion 120 of the draft tube 100. An impeller 20 of suitable size can provide an axial Y-Y flow velocity of about 2.0 to 2.3 m/s to the sludge within the second cylindrical portion 140 of the draft tube 100. The impeller 20 is rotated by a shaft 35 mounted onto the impeller hub 30 and the shaft 35 is connected to a drive unit 200. The drive unit 200 can comprise a gear or a frequency converter and an electric motor. The drive unit 200 is positioned above the reactor tank 111. The impeller 20, the shaft 35 and the drive unit 200 forms the agitator. The construction of the draft tube 100 makes it possible to use an axial flow impeller 20 with low shear stress and high pumping capacity. This will result in low operational costs i.e. low energy consumption. The impeller 20 will be discussed further in connection with figures 3 to 5.

The gap between the outer rim D4 of the impeller 20 and the inner rim of the second cylindrical portion 120 of the draft tube 100 is kept as small as mechanically possible in order to avoid flows that can have a negative effect on the impeller 20 efficiency.

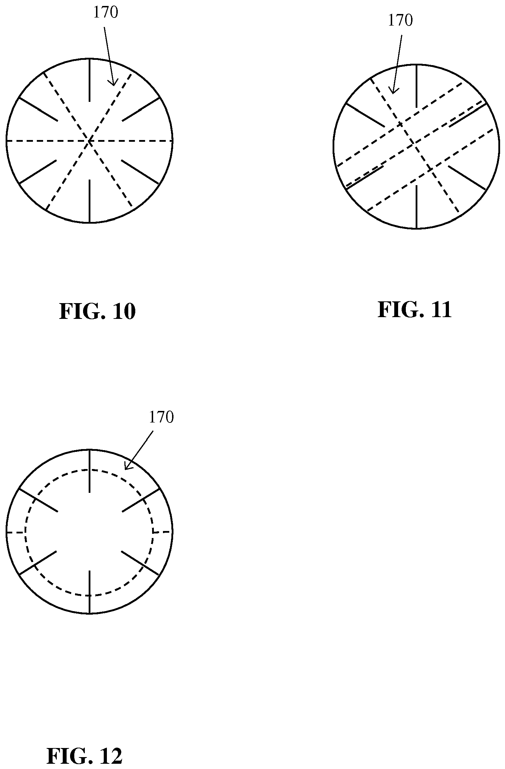

A gas supply device 170 is installed within the draft tube 100 below the impeller 20. The gas supply device 170 can be formed by a radial, lateral or circular manifold. Oxygen or a gas containing oxygen is blown from nozzles in the manifold to the sludge. The nozzles in the manifold are directed downwards towards the bottom 13 of the reactor 10. The gas supply device 170 can be positioned in the first cylindrical portion 120 of the draft tube 100 between the impeller 20 and the baffle arrangement 180 positioned in the second conical portion 130 of the draft tube 100. The gas supply device 170 can on the other hand be positioned at the bottom of the second conical portion 130 of the draft tube 100 just below the baffle arrangement 180. Embodiments of the gas supply device 170 will be discussed in connection with figures 10 to 12.

The second conical portion 130 of the draft tube 100 contributes to achieve a smooth axial Y-Y flow of the sludge downwards to the second cylindrical portion 140 of the draft tube 100. The impeller 20 induces swirls and other non-homogeneous phenomenon to the flow of sludge. These negative effects caused by the impeller 20 to the downwards flowing sludge below the impeller 20 are minimized with this second conical portion 130.

A baffle arrangement 180 is installed within this second conical portion 130 of the draft tube 100. The baffle arrangement 180 eliminates the swirls induced by the impeller 20 to the flow of sludge and contributes to a flow of sludge that is directed axially downwards. The construction of the baffle arrangement 180 can vary. Embodiments of the baffle arrangement 180 will be discussed in connection with figures 6 to 9.

The reactor 10 according to the invention is advantageously dimensioned according to the following principles.

The diameter D1 of the reactor tank 11 is advantageously in the range of 6 to 9 meters. The diameter D1 of the reactor tank 11 depends on the application and the range might be even broader.

The height H1 of the reactor tank 11 is several times the diameter D1 of the reactor tank 11. The height H1 of the reactor tank 11 is preferably 2.5 to 5 times the diameter D1 of the reactor tank 11. This height H1 range of the reactor tank 11 is a conservative range in which the reactor 10 performs efficiently. The ratio H1/D1 might thus vary even within a broader range.

The diameter D2 of the second cylindrical portion 140 of the draft tube 100 is preferably in the range of 0.2 to 0.5 times the diameter D 1 of the reactor tank 11.

The diameter D3 of the first cylindrical portion 120 in the draft tube 100 is preferably 1.45 to 1.6 times the diameter D2 of the second cylindrical portion 140 of the draft tube 100.

The height H5 of the first cylindrical portion 120 of the draft tube 100 is preferably 0.8 to 1.1 times the diameter D3 of the first cylindrical portion 120 of the draft tube 100.

The vertical distance H2 between the lower end 102 of the draft tube 100 and the bottom 13 of the reactor tank 11 is preferably 1.0 to 1.4 times the diameter D2 of the second cylindrical portion 140 of the draft tube102. This vertical distance H2 is the bottom clearance of the draft tube 100.

The vertical distance H3 between the upper end 101 of the draft tube 100 and the free surface level SL1 of the sludge within the reactor tank 11 is preferably 0.4 to 0.6 times the diameter D2 of the second cylindrical portion 140 of the draft tube 100. This vertical distance H3 is the top clearance of the draft tube 100.

The height H4 of the first conical portion 110 of the draft tube 100 is preferably 0.2 to 0.35 times the diameter D3 of the first cylindrical portion 120 of the draft tube 100.

The cone angle α1 of the first conical portion 110 is preferably 20 to 45 degrees, and more preferably 30 degrees.

The height H6 of the second conical portion 130 of the draft tube 100 is preferably 0.9 to 1.1 times the diameter D2 of the second cylindrical portion 140 of the draft tube 100, and more preferably equal to the diameter D2 of the second cylindrical portion 140 of the draft tube 100.

The cone angle α2 of the second conical portion 110 of the draft tube 100 is preferably 8 to 12 degrees, and more preferably 10 degrees.

The gap between the outer rim of the impeller 20 and the inner rim of the reactor tank 11 should be less than 50 mm in practical solutions when the diameter D1 of the reactor tank 11 is in the range of 6 to 9 meters and the diameter D2 of the second cylindrical portion 140 of the draft tube 100 is in the range of 0.2 to 0.5 times the diameter D 1 of the reactor tank 11.

The diameter D4 of the impeller 20 can with this arrangement be preferably 1.4 to 1.6, and more preferably 1.5 times the diameter D2 of the second cylindrical portion 140 of the draft tube 100. The diameter D4 of the impeller 20 depends on the reactor capacity and on the ratio H1/D1 between the height H1 and the diameter D1 of the reactor tank 11. A larger ratio H1/D1 between the height H1 and the diameter D1 of the reactor tank 11 requires also a larger ratio D4/D2 between the diameter D4 of the impeller and the diameter D2 of the second cylindrical portion 140 of the draft tube 100.

The height H7 of the second cylindrical portion 140 of the draft tube 100 is calculated by subtracting the height of the top clearance H3, the height H4 of the first conical portion 110, the height H5 of the first cylindrical portion 120, the height H6 of the second conical portion 130, and the height of the bottom clearance H2 from the height H1 of the reactor tank 11. The height H7 of the second cylindrical portion 140 of the draft tube 100 is thus H7 = H1 - (H2 + H3 + H4 + H5 + H6).

The hydrostatic pressure at the bottom 13 of the reactor tank 11 is in the order of 1.5 to 3.0 atm. i.e. 0.15 to 0.30 MPa.

The velocity of the sludge in the second cylindrical portion 140 of the draft tube 100 is in the range of 2.0 to 2.3 m/s in the inventive reactor 10.

Figure 3 shows a plan view of a blade of an impeller, which can be used in the reactor according to the invention. The invention is, however, not limited to this kind of impeller. Any impeller producing a strong axial flow can be used in the invention. The impeller 20 produces an axial flow and comprises four impeller blades 40, 50, 60, 70 being attached to a hub 30. The hub 30 and the four impeller blades 40, 50, 60, 70 rotate counter clockwise in the direction S1 of the arrow. The shaft 35 is attached to the hub 30 of the impeller 20. The impeller 20 has a diameter D4. The number of blades 40, 50, 60, 70 in the impeller 20 according to the invention is advantageously in the range of 3 to 5.

Figure 4 shows a plan view of a blade of the impeller of figure 3. The blade 40 has a leading edge 41, a trailing edge 42, a tip 43 and a rooth 44 attachable to a central hub 30 of the impeller 20. This impeller blade 40 is disclosed in the previously mentioned WO publication 2013/124539.

The cross section of the blade 40 is formed by a circular hub 30 and an enveloping rectangle 80. The circular hub 30 has a diameter D5. The rectangle 80 has a width A1 and a length B1. The width A1 of the rectangle 80 is smaller than the length B1 of the rectangle 80.

The first short side 81 of the rectangle 80 passes through the centre C of the circular hub 30 and extends at an equal distance A2 beyond the diameter D5 of the hub 30 at both sides of the hub 30. A portion of a second opposite short side 82 of the rectangle 80 forms the tip 43 of the blade 40. A portion of a first long side 83 of the rectangle 80 forms a portion 41B of the leading edge 41 of the blade 40. A portion of a second long side 84 of the rectangle froms a portion 42B of the trailing edge 42 of the blade 40. A first line passing along the first short side 81 of the rectangle 80 forms a reference line XI, X1.

A first half 31 (the lower half in the figure) of the circular hub 30 that is within the rectangle 80 forms a fist cut-out to the ractangle 80 so that the curved rooth 44 of the blade 40 sets against the curved outer surface of the hub 30. There are further symmetrical cut outs in the rectangle 80 at both sides of the circular hub 30 so that the blade 40 starting from the end points of the diameter D5 of the hub 30 widens in the form of a symmterical cone to the width A1 of the rectangle 80. The first inclined side 41A of the cone intersect at a first point P1 with the first long side 83 of the rectangle 80. The second opposite inclined side 42A of the cone intersect at a second point P2 with the second 84 long side of the rectangle 80. The perpendicular distance B2 measured from the reference line X1, X1 to the first point P1 and to the second point P2 is equal. The first inclined side 41A of the cone forms a first portion 41A of the leading edge 41 of the blade 40. The second inclined side 42A of the cone forms a first portion 42A of the trailing edge 42 of the blade 40.

A second portion 41B of the leading edge 41 is formed by a portion of the first long side 83 of the rectangle 80 until a third point P3. A third portion 41C of the leading edge 41 is formed by a straight line 41C being inclined towards the second long side 84 of the rectangle 80 and extending until a fifth point P5. An extension of said inclined line 41C intersects with the second short side 82 of the reactangle 80 at a seventh point P7. A fourth portion 41D of the leading edge 41 is formed by a first curved line 41D having a radius R6 and extending between the fifth point P5 and a ninth point P9. The ninth point P9 being positioned on a first end of the tip 43 coinciding with the second short side 82 of the rectangle 80.

A second portion 42B of the trailing edge 42 is formed by a portion of the second long side 84 of the rectangle 80 until a fourth point P4. A third portion 42C of the trailing edge 42 is formed by a straight line 42C being inclined towards to first long side 83 of the rectangle 80 and extending until a sixt point P6. An extension of said straight line 42C intersects with the second short side 82 of the reactangle 80 at an eight point P8. A fourth portion 42D of the trailing edge 42 is formed by a second curved line 42D having a radius R6 and extending between the sixt point P6 and a tenth point P10. The tenth point P10 being positioned at a second end of the tip 43 coinciding with the second short side 82 of the rectangle 80.

The blade 40 comprises further two bends 91, 92. A first straight bend 91 starts from the first point P1 in the leading edge 41 of the blade 40 and ends at the tip 43 of the balde 40 in a thirteenth point P13. A second straight bend 92 starts from an eleventh point P11 at the first portion 41A of the leading edge 41 and ends at a twelfth point P12 in the middle of the second curved line 42D. The extension of the second straight bend 92 intersects with the first short side 81 of the rectangle 80 at a fifteenth point P15. The two bends 91, 92 divide the blade 40 into a leading edge portion 45 a centre portion 46 and a trailing edge portion 47.

The dimensions of the blade 40 are as follows:
The length B1 of the rectangle 80 is 0.5 times the diameter D4 of the impeller 20.

The distance A2 of the first short side 81 of the rectangle 80 beyond the diameter D5 of the hub 30 is 0.2 times the width A1 of the rectangle 80.

The perpendicular distance A3 from the first long side 83 of the rectangle 80 to the fifteenth point P15 is 0.1 times the width A1 of the reactangle 80.

The perpendicular distance A4 from the second long side 84 of the reactangle 80 to the eight point P8 is 0.1 to 0.2 times the length B1 of the rectangle 80.

The perpendicular distance A5 form the first long side 83 of the rectangle 80 to the sevent point P7 is 0.1 to 0.2 times the length B1 of the rectangle 80.

The perpendicular distance A6 from the first long side 83 of the rectangle 80 to the thirteenth point P13 is 0.4 times the length B1 of the rectangle 80.

The perpendicular distance B2 from the reference line XI, XI to point P1 and point P2 is 0.2 times the length B1 of the rectangle 80.

The perpendicular distance B3 from the reference line XI, XI to the fourth point P4 is 0.75 times the length B1 of the rectangle 80.

The perpendicular distance B4 from the reference line XI, XI to the third point P3 is 0.5 times the length B1 of the rectangle 80.

The first curved line 41D extending beteen the fifth point P5 and the ninth point P9 has a radius R6 that is 0.2 times the width A1 of rectangle 80.

The second curved line 42D extending between the sixt point P6 and the tenth point P10 has a radius R6 that is the same as the radius of the first curved line 41D i.e. 0.2 times the width A1 of rectangle 80.

Figure 5 shows a side view of the blade of the impeller of figure 4. The leading edge portion 45 is angled at a first angle α1 downwards in relation to the centre portion 46 and the trailing edge portion 47 is angled at a second angle α2 downwards in relation to the centre portion 46. The centre portion 46 is angled at a third angle α3 in relation to the horizontal plane. The three portions 45, 46, 47 are flat sections. The blade can be made e.g. of a metal sheet by bending. The first angle α1 is in the range of 5 to 7 degrees, the second angle α2 is in the range of 7 to 9 degrees and the third angle α3 is in the range of 19 to 25 degrees. The pitch angle α2 + α3 of the blade 40 at the root 44 joined to the hub 30 can vary in a range of 27 to 33 degrees. A larger blade pitch angle provides a higher pumping capacity, but may result in greater power consumption. Such an impeller provides excellent mixing performance with very low power consumption and high pumping capacity and effectiveness.

Figure 6 shows a cross section of a first embodiment of a baffle arrangement, which can be used in the reactor according to the invention. Figure 7 shows a cross section of a baffle to be used in the baffle arrangement of figure 6. The baffle arrangement 180 in this embodiment comprises a 6-baffle arrangement. The number of baffles 181, 182 could vary from 4 to 6 depending on the diameter D2 of the second cylindrical part 140 of the draft tube 100 and/or depending on the reactor 10 capacity. The larger the reactor 10 capacity is, the more baffles 181, 182 are needed. The baffles 181, 182 extend in the vertical direction Y-Y so that the upper edge of the baffles 181, 182 are at a small distance below the impeller 20. This embodiment can effectively eliminate and/or minimize the swirling in the flow of the sludge caused by the impeller 20. The pressure drop induced by this baffle arrangement 180 in the flow of sludge is small and this baffle arrangement 180 has little effect on the impeller 20 efficiency. The baffles have a height H8 and a first width W1 at the lower end of the baffles 181 and a second width W2 at the upper end of the baffles 181.

The height H8 of the baffles 181, 182 in the baffle arrangement 180 is preferably in the range of 0.9 to 1.0 times the height H6 of the second conical portion 130 of the draft tube 100. The width W1 of the baffles 181, 182 at the lower edge of the baffles 181, 182 is preferably in the range of 0.25 to 0.5, and more preferably 0.3 times the diameter D2 of the second cylindrical portion 140 of the draft tube 100. The width W2 of the baffles 181, 182 at the upper edge of the baffles 181, 182 is determined by the cone angle α2 of the second conical portion 130 of the draft tube 100.

Figure 8 shows a cross section of a second embodiment of a baffle arrangement, which can be used in the reactor according to the invention. This baffle arrangement corresponds to that shown in figure 7. The width W1 of the baffles 181, 182 at the lower edge of the baffles 181, 182 is in this embodiment 0.5 times the diameter D2 of the second cylindrical portion 140 of the draft tube 100. The height H8 of the baffles 181, 182 corresponds to the height H8 of the baffles 181, 182 in figure 7.

Figure 9 shows a cross section of a third embodiment of a baffle arrangement, which can be used in the reactor according to the invention. The baffle arrangement 180 is in this embodiment composed of a plate matrix. The baffles 181, 182 are composed of vertically directed plates forming a certain pattern. Flow passages passing vertically Y-Y through the baffle arrangement 180 are thus formed in this baffle arrangement 180. The cross section of the passages in the middle portion of the baffle arrangement 180 is rectangular. The passages at the rim of the second conical section 130 have one curved wall i.e. the wall of the second conical section 130.

The outer edge of the baffles 181, 182 can in all embodiments be welded or embodied onto the wall of the second conical portion 130 of the draft tube 100.

Figure 10 shows a cross section of a first embodiment of a gas supply device, which can be used in the reactor according to the invention. The dotted lines in the figure show a radial gas supply device 170. The branches of the radial gas supply device 170 extend radially within the draft tube 100. Each branch is provided with nozzles or openings being directed downwards towards the bottom 13 of the reactor tank 11.

Figure 11 shows a cross section of a second embodiment of a gas supply device, which can be used in the reactor according to the invention. The dotted lines in the figure show a lateral gas supply device 170. The branches of the lateral gas supply device 170 extend laterally within the draft tube 100. Each branch is provided with nozzles or openings being directed downwards towards the bottom 13 of the reactor tank 11.

Figure 12 shows a cross section of a third embodiment of a gas supply device, which can be used in the reactor according to the invention. The dotted lines in the figure show a ring shaped gas supply device 170. The main branch of the gas supply device 170 extends in a ring within the draft tube 100. The main branch is provided with nozzles or openings being directed downwards towards the bottom 13 of the reactor tank 11. There are connection portions to the main branch.

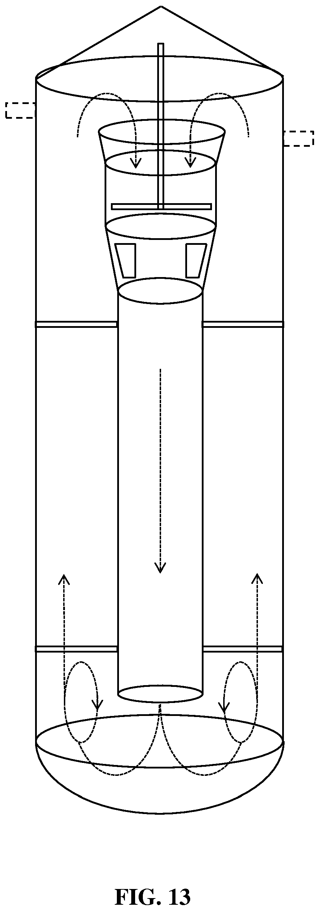

Figure 13 shows the flow pattern of the reactor in figure 1. The reactor 10 according to the invention provides high axial velocity of the flow of sludge within the draft tube 100 and a favourable flow pattern for mixing and gas dispersion. The sludge is driven downwards through the draft tube 100 by the impeller 20. The flow jet from the outlet opening at the bottom end 102 of the draft tube 100 moves towards the reactor bottom 13 where it changes direction by 180 degrees. The flow of sludge moves after the change in direction upwards in the space between the draft tube 100 and the reactor tank 11 towards the top 101 of the draft tube 100. The solid particles in the flow of sludge will be transported with the fluid in the sludge to the top 101 of the draft tube 100 in order to be reintroduced into the circulation. There appears a secondary vortex around the outer perimeter of the draft tube 100 at the lower end 102 of the draft tube 100. This arrangement will result in a strong mixing and agitation action within the reactor 10 volume, which prevents solid particles from settling in the bottom 13 region of the reactor 10. There is no bed of solid particles formed in the bottom 13 region of the reactor 10. The solid particles are recirculated within the whole volume of the reactor 10.

In occasionally required shutdown, the solid particles settle on the bottom 13 of the reactor tank 11 and form a solid bed there. When the reactor starts up, the solid bed does not have to be removed in any way from the bottom 13 of the reactor tank 11. The reactor 10 can provide enough strong agitation to automatically remove the solid bed when the reactor 10 starts operating again. No auxiliary measures and/or equipment are thus needed before or during start-up of the reactor 10.

The performance of the top-agitated reactor according to the invention is demonstrated by using Computational Fluid Dynamics (CFD) modelling for an industrial scale reactor. The dimensions of the reactor in the calculation are as follows. The diameter D1 of the reactor is 7.5 m and the height H1 of the reactor is 22.3 m. The diameter D2 of the second cylindrical portion 140 is 2.0 m and the bottom clearance H2 is 1.3*D2. An axial flow impeller with a diameter D4 of 2.8 m and submerged to a depth of 3.7 m from the free surface SL1 of the sludge is used. The tip speed of the impeller was about 6.2 m/s in both cases. The solid mass fraction of 15% with particle sizes 50 µm and 100 µm are considered. A direct leaching reactor according to the previously mentioned WO publication 01/12307 provided with a double action impeller mounted at the outlet opening at the bottom end 102 of the draft tube 100 is used for comparison.

CFD modelling demonstrates that the reactor according to the invention performs well at various operational conditions and provides strong agitation and mixing, so that a homogeneous particle distribution in the whole volume of the reactor is achieved.

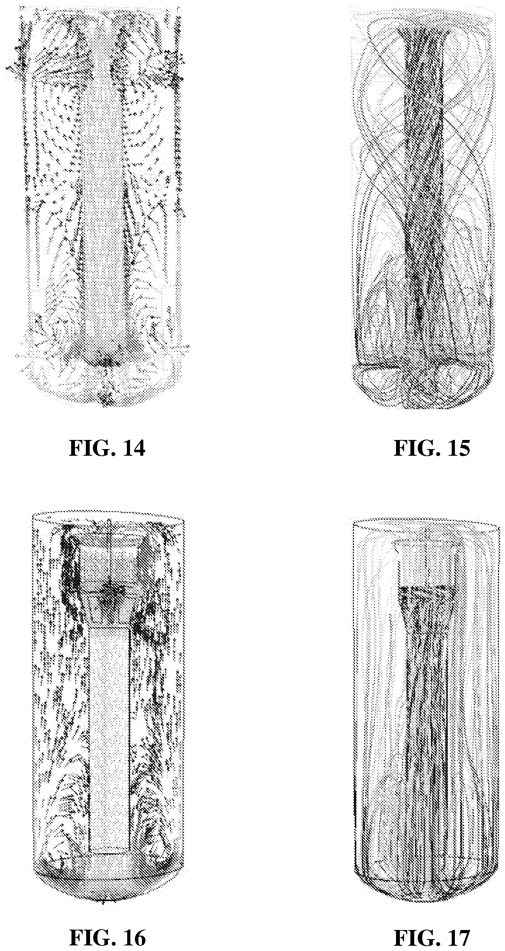

Figure 14 shows velocity vector plots and figure 15 shows velocity path lines for the sludge flow in a prior art bottom-agitated reactor. Figure 16 shows velocity vector plots and figure 17 shows velocity path lines for the sludge flow in a top-agitated reactor according to the invention.

The CFD simulation is based on the use of a sludge comprising of liquid and solid particles. The portion of solid particles in the sludge is 15% calculated from the weight of the sludge. 6.5% of the volume of the sludge is formed by tiny particles (dp = 50 µm) and 1,1% of the volume of the sludge is formed by coarse particles (dp = 100 µm).

Figures 14 and 15 relating to a prior art bottom-agitated reactor show that there appears a clockwise recirculation zone in the bottom, a main anticlockwise recirculation zone and second vortexes in the bulk region. Some swirling flow is also observed although baffles are used in the lower portion of the draft tube.

Figures 16 and 17 relating to a top-agitated reactor according to the invention show that the flow pattern is quite similar to that shown in figure 13. This means that the solid particles recirculate within the whole reactor volume.

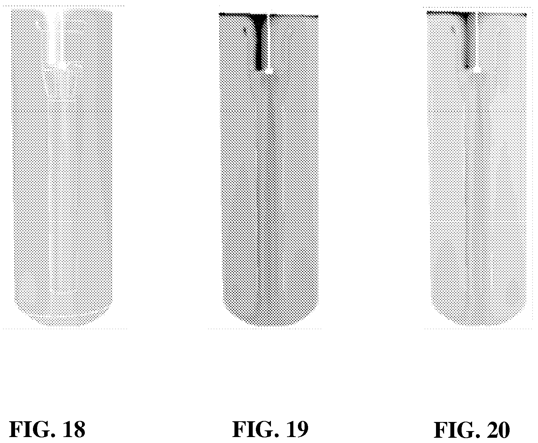

Figure 18 shows volume fractions of the solution, figure 19 shows volume fractions of tiny particles, and figure 20 shows volume fractions of coarse particles in a top-agitated reactor according to the invention. It is clearly seen from these figures that a homogenous distribution of particles is achieved. There is also no bed of solid particles formed at the bottom of the reactor.

A comparison is made for characteristic values of a top-agitated reactor according to the invention and a prior art bottom-agitated reactor. The mass flow rate through the draft tube is used to calculate a pumping number Nq of the reactor.

It should be noted that the mass flow rate through the draft tube is quite the same as that around the impeller in the top-agitated reactor according to the invention. This indicates that all the power imposed on the impeller has been used for recirculation of the sludge in the top-agitated reactor according to the invention.

The mass flow rate through the draft tube is only about 50% of the mass flow rate around the impeller in the prior art bottom-agitated reactor. This means that only about half of the mass flow rate is used for sludge recirculation in the volume of the reactor in the prior art bottom-agitated reactor.

The comparison shows the differences between a prior art bottom-agitated reactor and an inventive top-agitated reactor, but the comparison does not mean that either of these reactors would be better and the other worse. The differences show simply that said reactors are suited for different purposes.

The power needed in the agitator in the top-agitated reactor according to the invention is about 20% of the power needed in the agitator in the prior art bottom-agitated reactor.

The power number Nₚ defined as Nₚ=P/(ρN³D⁵), where P is the power of the agitator, N is the rotational speed and D is the diameter of the impeller, is in the top-agitated reactor according to the invention about 0.17 times the power number Nₚ in the prior art bottom-agitated reactor.

The pumping mass flow rate mₚ defined as mₚ = m/P is in the top-agitated reactor according to the invention about 4.2 times the pumping mass flow rate mₚ in the prior art bottom-agitated reactor.

The pumping number N_{q} defined as N_{q} = m/(ρND³) is in the top-agitated reactor according to the invention about 0.7 times the pumping number N_{q} in the prior art bottom-agitated reactor.

The pumping effectiveness ηₑ defined as ηₑ = N_{q}/Nₚ is in the top-agitated reactor according to the invention about 4.3 times the pumping effectiveness ηₑ in the prior art bottom-agitated reactor.

The pumping efficiency λₚ defined as λₚ = N_{q}/(Nₚ)^{1/3} is in the top-agitated reactor according to the invention about 1.3 times the pumping efficiency λₚ in the prior art bottom-agitated reactor.

Upon reading the present application, it will be obvious to a person skilled in the art that the inventive concept can be implemented in various ways. The invention and its embodiments are not limited to the examples described above but may vary within the scope of the claims.

## Claims

1. Reactor for mixing liquid, gas and solid material, said reactor (10) comprising:
a vertically extending cylindrical reactor tank (11) having an upper end (12) and a closed bottom (13), said reactor tank (11) further having a diameter (D1), and a height (H1) that is several times the diameter (D1),
a draft tube (100) extending vertically and concentrically within the reactor tank (11) and being supported (14, 15) at the tank (11), said draft tube (100) having a height (H8), an open upper end (101) forming an inlet opening, and an open lower end (102) forming an outlet opening, the upper end (101) being positioned at a height forming an upper clearance (H3) below the free surface level (SL1) of the material in the reactor tank (11), the lower end (102) being positioned at a height forming a bottom clearance (H2) above the bottom (13) of the reactor tank (11),
an impeller (20) connected to a vertical shaft (35) being positioned within the draft tube (100),
a baffle arrangement (180) being positioned within the draft tube (100) below the impeller (20), and
a gas supply device (170) being positioned within the draft tube (100) below the impeller (20),
**characterized in that**
the draft tube (100) is formed of a continuous construction comprising four portions (110, 120, 130, 140), said portions (110, 120, 130, 140) being formed from the upper end (111) towards the lower end (142) of:
a first conical portion (110) contracting towards a lower end (112), said first conical portion (110) having a height (H4) and a cone angle (α1), an upper end of the first conical portion (110) forming the upper end (101) of the draft tube (100),
a first cylindrical portion (120) having a diameter (D3) and a height (H5), an upper end of the first cylindrical portion (120) coinciding with the lower end (112) of the first conical portion (110),
a second conical portion (130) contracting towards a lower end (132), said second conical portion (130) having a height (H6) and a cone angle (α2), an upper end of the second conical portion (130) coinciding with a lower end (122) of the first cylindrical portion (120), and
a second cylindrical portion (140) having a diameter (D2) and a height (H7), an upper end of the second cylindrical portion (140) coinciding with the lower end (132) of the second conical portion (130), a lower end of the second cylindrical portion (140) forming the lower end (142) of the draft tube (100),
whereby the impeller (20) being an axial flow impeller is positioned at a lower end (122) of the first cylindrical portion (120) and the vertical shaft (35) extends concentrically upwards through the upper end (12) of the reactor tank (11), the baffle arrangement (180) being formed of vertically extending baffles (181, 182) is positioned within the second conical portion (130).

2. A reactor according to claim 1, **characterized in that** the dimensions of the reactor are as follows:
the diameter (D2) of the second cylindrical portion (140) of the draft tube (100) is preferably in the range of 0.2 to 0.5 times the diameter (D1) of the reactor tank (11),
the diameter (D3) of the first cylindrical portion (120) in the draft tube (100) is preferably 1.45 to 1.6 times the diameter (D2) of the second cylindrical portion (140) of the draft tube (100),
the bottom clearance (H2) between the lower end (102) of the draft tube (100) and the bottom (13) of the reactor tank (11) is preferably 1.0 to 1.4 times the diameter (D2) of the second cylindrical portion (140) of the draft tube (100),
the height (H5) of the first cylindrical portion (120) of the draft tube (100) is preferably 0.8 to 1.1 times the diameter (D3) of the first cylindrical portion (120) of the draft tube (100),
the height (H4) of the first conical portion (110) of the draft tube (100) is preferably 0.2 to 0.35 times the diameter (D3) of the first cylindrical portion (120) of the draft tube (100),
the cone angle (α1) of the first conical portion (110) of the draft tube (100) is preferably 20 to 45 degrees, more preferably 30 degrees,
the height (H6) of the second conical portion (130) of the draft tube (100) is preferably 0.9 to 1.1 times the diameter (D2) of the second cylindrical portion (140) of the draft tube (100), and more preferably equal to the diameter (D2) of the second cylindrical portion (140) of the draft tube (100),
the cone angle (α2) of the second conical portion (110) of the draft tube (100) is preferably 8 to 12 degrees, more preferably 10 degrees, and
the height (H7) of the second cylindrical portion (140) of the draft tube (100) is calculated by subtracting the height of the top clearance (H3), the height (H4) of the first conical portion (110), the height (H5) of the first cylindrical portion (120), the height (H6) of the second conical portion (130), and the height of the bottom clearance (H2) from the height (H1) of the tank (11),
whereby the top clearance (H3) defined as the distance between the upper end (101) of the draft tube (100) and the free surface level (SL1) of the material within the reactor tank (11) is 0.4 to 0.6 times the diameter (D2) of the second cylindrical portion (140) of the draft tube (100).

3. A reactor according to claim 2, **characterized in that** the diameter (D4) of the impeller (20) is preferably in the range of 1.4 to 1.6, more preferably 1.5 times the diameter (D2) of the second cylindrical portion (140) of the draft tube (100).

4. A reactor according to any one of claims 1 to 3, **characterized in that** the impeller (20) has a low shear stress and a high pumping capacity.

5. A reactor according to any one of claims 1 to 4, **characterized in that** the number of blades (40, 50, 60, 70) in the impeller (20) is in the range of 3 to 5.

6. A reactor according to any one of claims 1 to 5, **characterized in that** the gas supply device (170) is positioned in the first cylindrical portion (120) of the draft tube (100) between the impeller (20) and the baffle arrangement (180) positioned in the second conical portion (130) of the draft tube (100).

7. A reactor according to any one of claims 1 to 5, **characterized in that** the gas supply device (170) is positioned at the bottom of the second conical portion (130) of the draft tube (100) just below the baffle arrangement (180).

## Patentansprüche

1. Reaktor zum Mischen von Flüssig-, Gas- und Festmaterial, wobei der Reaktor (10) umfasst:
einen zylindrischen, sich senkrecht erstreckenden Reaktortank (11) mit einem oberen Ende (12) und einem geschlossenen Boden (13), wobei der Reaktortank (11) einen Durchmesser (D1) und eine Höhe (H1), die ein Mehrfaches des Durchmessers (D1) darstellt, aufweist,
ein Fallrohr (100), das sich im Reaktortank (11) senkrecht und mittig erstreckt und am Tank (11) angebracht (14, 15) ist, wobei dieses Fallrohr (100) eine Höhe (H8), ein offenes, eine Eintrittsöffnung bildendes oberes Ende (101) und ein offenes, eine Austrittsöffnung bildendes unteres Ende (102) aufweist, wobei das obere Ende (101) auf einer Höhe liegt, die unterhalb der freien Oberfläche (SL1) des Materials im Reaktortank (11) einen oberen Abstand (H3) bildet, und das untere Ende (102) auf einer Höhe liegt, die oberhalb des Bodens (13) des Reaktortanks (11) einen Bodenabstand (H2) bildet,
ein Flügelrad (20), das mit einem senkrechten, innerhalb des Fallrohrs (100) angeordneten Schaft (35) verbunden ist,
eine Leitblechanordnung (180), die sich innerhalb des Fallrohrs (100) unterhalb des Flügelrads (20) befindet, und
eine Gasversorgungseinrichtung (170), die sich innerhalb des Fallrohrs (100) unterhalb des Flügelrads (20) befindet,
**dadurch gekennzeichnet, dass**
das Fallrohr (100) aus einem zusammenhängenden Aufbau gebildet ist, der vier Abschnitte (110, 120, 130, 140) umfasst, wobei diese Abschnitte (110, 120, 130, 140) vom oberen Ende (111) bis zum unteren Ende (142) gebildet sind aus:
einem ersten kegelförmigen Abschnitt (110), der sich zu einem unteren Ende (112) hin verjüngt, wobei dieser erste kegelförmige Abschnitt (110) eine Höhe (H4) und einen Kegelwinkel (α1) aufweist und wobei ein oberes Ende des ersten kegelförmigen Abschnitts (110) das obere Ende (101) des Fallrohrs (100) bildet,
einem ersten zylindrischen Abschnitt (120) mit einem Durchmesser (D3) und einer Höhe (H5), wobei ein oberes Ende des ersten zylindrischen Abschnitts (120) mit dem unteren Ende (112) des ersten kegelförmigen Abschnitts (110) übereinstimmt,
einem zweiten kegelförmigen Abschnitt (130), der sich zu einem unteren Ende (132) hin verjüngt, wobei dieser zweite kegelförmige Abschnitt (130) eine Höhe (H6) und einen Kegelwinkel (α2) aufweist und wobei ein oberes Ende des zweiten kegelförmigen Abschnitts (130) mit einem unteren Ende (122) des ersten zylindrischen Abschnitts (120) übereinstimmt, und
einem zweiten zylindrischen Abschnitt (140) mit einem Durchmesser (D2) und einer Höhe (H7), wobei ein oberes Ende des zweiten zylindrischen Abschnitts (140) mit dem unteren Ende (132) des zweiten kegelförmigen Abschnitts (130) übereinstimmt und ein unteres Ende des zweiten zylindrischen Abschnitts (140) das untere Ende (142) des Fallrohrs (100) bildet,
wobei das Flügelrad (20) ein Flügelrad mit Axialströmung ist und an einem unteren Ende (122) des ersten zylindrischen Abschnitts (120) angeordnet ist, und der senkrechte Schaft (35) sich mittig nach oben durch das obere Ende (12) des Reaktortanks (11) erstreckt, wobei die Leitblechanordnung (180) aus sich senkrecht erstreckenden Leitblechen (181, 182) gebildet ist und innerhalb des zweiten kegelförmigen Abschnitts (130) angeordnet ist.

2. Reaktor nach Anspruch 1, **dadurch gekennzeichnet, dass** die Abmessungen des Reaktors folgende sind:
der Durchmesser (D2) des zweiten zylindrischen Abschnitts (140) des Fallrohrs (100) liegt vorzugsweise im Bereich vom 0,2- bis 0,5-Fachen des Durchmessers (D1) des Reaktortanks (11),
der Durchmesser (D3) des ersten zylindrischen Abschnitts (120) im Fallrohr (100) ist vorzugsweise das 1,45- bis 1,6-Fache des Durchmessers (D2) des zweiten zylindrischen Abschnitts (140) des Fallrohrs (100),
der Bodenabstand (H2) zwischen dem unteren Ende (102) des Fallrohrs (100) und dem Boden (13) des Reaktortanks (11) ist vorzugsweise das 1,0- bis 1,4-Fache des Durchmessers (D2) des zweiten zylindrischen Abschnitts (140) des Fallrohrs (100),
die Höhe (H5) des ersten zylindrischen Abschnitts (120) des Fallrohrs (100) ist vorzugsweise das 0,8- bis 1,1-Fache des Durchmessers (D3) des ersten zylindrischen Abschnitts (120) des Fallrohrs (100),
die Höhe (H4) des ersten kegelförmigen Abschnitts (110) des Fallrohrs (100) ist vorzugsweise das 0,2- bis 0,35-Fache des Durchmessers (D3) des ersten zylindrischen Abschnitts (120) des Fallrohrs (100),
der Kegelwinkel (α1) des ersten kegelförmigen Abschnitts (110) des Fallrohrs (100) beträgt vorzugsweise 20 bis 45 Grad, besonders bevorzugt 30 Grad,
die Höhe (H6) des zweiten kegelförmigen Abschnitts (130) des Fallrohrs (100) ist vorzugsweise das 0,9- bis 1,1-Fache des Durchmessers (D2) des zweiten zylindrischen Abschnitts (140) des Fallrohrs (100), und besonders bevorzugt gleich dem Durchmesser (D2) des zweiten zylindrischen Abschnitts (140) des Fallrohrs (100),
der Kegelwinkel (α2) des zweiten kegelförmigen Abschnitts (110) des Fallrohrs (100) beträgt vorzugsweise 8 bis 12 Grad, besonders bevorzugt 10 Grad, und
die Höhe (H7) des zweiten zylindrischen Abschnitts (140) des Fallrohrs (100) wird durch Subtraktion der Höhe des oberen Abstands (H3), der Höhe (H4) des ersten kegelförmigen Abschnitts (110), der Höhe (H5) des ersten zylindrischen Abschnitts (120), der Höhe (H6) des zweiten kegelförmigen Abschnitts (130) und der Höhe des Bodenabstands (H2) von der Höhe (H1) des Tanks (11) berechnet,
wobei der als Entfernung zwischen dem oberen Ende (101) des Fallrohrs (100) und der freien Oberfläche (SL1) des Materials im Reaktortank (11) definierte obere Abstand (H3) vorzugsweise das 0,4- bis 0,6-Fache des Durchmessers (D2) des zweiten zylindrischen Abschnitts (140) des Fallrohrs (100) beträgt.

3. Reaktor nach Anspruch 2, **dadurch gekennzeichnet, dass** der Durchmesser (D4) des Flügelrads (20) vorzugsweise im Bereich vom 1,4- bis 1,6-Fachen, besonders bevorzugt beim 1,5-Fachen des Durchmessers (D2) des zweiten zylindrischen Abschnitts (140) des Fallrohrs (100) liegt.

4. Reaktor nach einem der Ansprüche 1 bis 3, **dadurch gekennzeichnet, dass** das Flügelrad (20) eine niedrige Scherbeanspruchung und eine hohe Pumpfähigkeit aufweist.

5. Reaktor nach einem der Ansprüche 1 bis 4, **dadurch gekennzeichnet, dass** die Anzahl der Flügelblätter (40, 50, 60, 70) im Flügelrad (20) im Bereich von 3 bis 5 liegt.

6. Reaktor nach einem der Ansprüche 1 bis 5, **dadurch gekennzeichnet, dass** die Gasversorgungseinrichtung (170) im ersten zylindrischen Abschnitt (120) des Fallrohrs (100) zwischen dem Flügelrad (20) und der im zweiten kegelförmigen Abschnitt (130) des Fallrohrs (100) angeordneten Leitblechanordnung (180) angeordnet ist.

7. Reaktor nach einem der Ansprüche 1 bis 5, **dadurch gekennzeichnet, dass** die Gasversorgungseinrichtung (170) unmittelbar unter der Leitblechanordnung (180) am Boden des zweiten kegelförmigen Abschnitts (130) des Fallrohrs (100) angeordnet ist.

## Revendications

1. Réacteur pour le mélange de matières liquides, gazeuses et solides, ledit réacteur (10), comprenant :
une cuve de réacteur cylindrique s'étendant verticalement (11) ayant une extrémité supérieure (12) et un fond fermé (13), ladite cuve de réacteur (11) ayant en outre un diamètre (D1), et une hauteur (H1) qui est plusieurs fois supérieure au diamètre (D1),
un tube d'aspiration (100) s'étendant verticalement et concentriquement à l'intérieur de la cuve de réacteur (11) et étant supporté (14, 15) au niveau de la cuve (11), ledit tube d'aspiration (100) ayant une hauteur (H8), une extrémité supérieure ouverte (101) formant une ouverture d'admission, et une extrémité inférieure ouverte (102) formant une ouverture de sortie, l'extrémité supérieure (101) étant positionnée à une hauteur formant un dégagement supérieur (H3) en dessous du niveau de la surface libre (SL1) des matières dans la cuve de réacteur (11), l'extrémité inférieure (102) étant positionnée à une hauteur formant un dégagement inférieur (H2) au-dessus du fond (13) de la cuve de réacteur (11),
une roue à aubes (20) reliée à un arbre vertical (35) étant positionnée à l'intérieur du tube d'aspiration (100),
un agencement de chicanes (180) étant positionné à l'intérieur du tube d'aspiration (100) en dessous de la roue à aubes (20), et
un dispositif d'alimentation en gaz (170) étant positionné à l'intérieur du tube d'aspiration (100) en dessous de la roue à aubes (20),
**caractérisé en ce que**
le tube d'aspiration (100) est formé d'une construction continue comprenant quatre parties (110, 120, 130, 140), lesdites parties (110, 120, 130, 140) étant formées à partir de l'extrémité supérieure (111) vers l'extrémité inférieure (142) de :
une première partie conique (110) se contractant vers une extrémité inférieure (112), ladite première partie conique (110) ayant une hauteur (H4) et un angle de cône (α1), une extrémité supérieure de la première partie conique (110) formant l'extrémité supérieure (101) du tube d'aspiration (100),
une première partie cylindrique (120) ayant un diamètre (D3) et une hauteur (H5), une extrémité supérieure de la première partie cylindrique (120) coïncidant avec l'extrémité inférieure (112) de la première partie conique (110),
une seconde partie conique (130) se contractant vers une extrémité inférieure (132), ladite seconde partie conique (130) ayant une hauteur (H6) et un angle de cône (α2), une extrémité supérieure de la seconde partie conique (130) coïncidant avec une extrémité inférieure (122) de la première partie cylindrique (120), et
une seconde partie cylindrique (140) ayant un diamètre (D2) et une hauteur (H7), une extrémité supérieure de la seconde partie cylindrique (140) coïncidant avec l'extrémité inférieure (132) de la seconde partie conique (130), une extrémité inférieure de la seconde partie cylindrique (140) formant l'extrémité inférieure (142) du tube d'aspiration (100),
selon lequel la roue à aubes (20), étant une roue à aubes axiale, est positionnée au niveau d'une extrémité inférieure (122) de la première partie cylindrique (120) et l'arbre vertical (35) s'étend de manière concentrique vers le haut à travers l'extrémité supérieure (12) de la cuve de réacteur (11), l'agencement de chicanes (180) étant formé de chicanes s'étendant verticalement (181, 182) est positionné à l'intérieur de la seconde partie conique (130).

2. Réacteur selon la revendication 1, **caractérisé en ce que** les dimensions du réacteur sont comme suit :
le diamètre (D2) de la seconde partie cylindrique (140) du tube d'aspiration (100) est de préférence dans la plage de 0,2 à 0,5 fois le diamètre (D1) de la cuve de réacteur (11),
le diamètre (D3) de la première partie cylindrique (120) dans le tube d'aspiration (100) est de préférence de 1,45 à 1,6 fois le diamètre (D2) de la seconde partie cylindrique (140) du tube d'aspiration (100),
le dégagement inférieur (H2) entre l'extrémité inférieure (102) du tube d'aspiration (100) et le fond (13) de la cuve de réacteur (11) est de préférence de 1,0 à 1,4 fois le diamètre (D2) de la seconde partie cylindrique (140) du tube d'aspiration (100),
la hauteur (H5) de la première partie cylindrique (120) du tube d'aspiration (100) est de préférence de 0,8 à 1,1 fois le diamètre (D3) de la première partie cylindrique (120) du tube d'aspiration (100),
la hauteur (H4) de la première partie conique (110) du tube d'aspiration (100) est de préférence de 0,2 à 0,35 fois le diamètre (D3) de la première partie conique (120) du tube d'aspiration (100),
l'angle de cône (α1) de la première partie conique (110) du tube d'aspiration (100) est de préférence de 20 à 45 degrés, de manière davantage préférée de 30 degrés,
la hauteur (H6) de la seconde partie conique (130) du tube d'aspiration (100) est de préférence de 0,9 à 1,1 fois le diamètre (D2) de la seconde partie cylindrique (140) du tube d'aspiration (100), et de manière davantage préférée, elle est égale au diamètre (D2) de la seconde partie cylindrique (140) du tube d'aspiration (100),
l'angle de cône (α2) de la seconde partie conique (110) du tube d'aspiration (100) est de préférence de 8 à 12 degrés, de manière davantage préférée de 10 degrés, et
la hauteur (H7) de la seconde partie cylindrique (140) du tube d'aspiration (100) est calculée en soustrayant la hauteur du dégagement supérieur (H3), la hauteur (H4) de la première partie conique (110), la hauteur (H5) de la première partie cylindrique (120), la hauteur (H6) de la seconde partie conique (130), et la hauteur du dégagement inférieur (H2) à partir de la hauteur (H1) de la cuve (11),
selon lequel le dégagement supérieur (H3) défini comme la distance entre l'extrémité supérieure (101) du tube d'aspiration (100) et le niveau de la surface libre (SL1) des matières à l'intérieur de la cuve de réacteur (11) est 0,4 à 0,6 fois le diamètre (D2) de la seconde partie cylindrique (140) du tube d'aspiration (100).

3. Réacteur selon la revendication 2, **caractérisé en ce que** le diamètre (D4) de la roue à aubes (20) est de préférence dans la plage de 1,4 à 1,6, de manière davantage préférée de 1,5 fois le diamètre (D2) de la seconde partie cylindrique (140) du tube d'aspiration (100).

4. Réacteur selon l'une quelconque des revendications 1 à 3, **caractérisé en ce que** la roue à aubes (20) a une contrainte de cisaillement faible et une haute capacité de pompage.

5. Réacteur selon l'une quelconque des revendications 1 à 4, **caractérisé en ce que** le nombre de pales (40, 50, 60, 70) dans la roue à aubes (20) est dans la plage de 3 à 5.

6. Réacteur selon l'une quelconque des revendications 1 à 5, **caractérisé en ce que** le dispositif d'alimentation en gaz (170) est positionné dans la première partie cylindrique (120) du tube d'aspiration (100), entre la roue à aubes (20) et l'agencement de chicanes (180) positionné dans la seconde partie conique (130) du tube d'aspiration (100).

7. Réacteur selon l'une quelconque des revendications 1 à 5, **caractérisé en ce que** le dispositif d'alimentation en gaz (170) est positionné au fond de la seconde partie conique (130) du tube d'aspiration (100) juste en dessous de l'agencement de chicanes (180).
